Europäisches Patentamt

European Patent Office

Office européen des brevets

(19)

(11) **EP 0 833 431 A2**

(12) **EUROPÄISCHE PATENTANMELDUNG**

(43) Veröffentlichungstag:
01.04.1998 Patentblatt 1998/14

(51) Int. Cl.$^6$: **H02M 5/27**

(21) Anmeldenummer: 97116439.7

(22) Anmeldetag: 20.09.1997

(84) Benannte Vertragsstaaten:
AT BE CH DE DK ES FI FR GB GR IE IT LI LU MC NL PT SE

(30) Priorität: 27.09.1996 DE 19639773

(71) Anmelder: ABB
PATENT GmbH
68309 Mannheim (DE)

(72) Erfinder: **Bernet, Steffen, Dr.**
**69245 Bammental (DE)**

(74) Vertreter:
**Rupprecht, Klaus, Dipl.-Ing. et al**
**c/o ABB Patent GmbH,**
**Postfach 10 03 51**
**68128 Mannheim (DE)**

(54) **Dreiphasiger Matrix-Stromrichter und Verfahren zum Betrieb**

(57) Es wird ein dreiphasiger Matrix-Stromrichter zur Umrichtung von Wechselspannungen vorgegebener Amplitude und Frequenz in Wechselspannungen beliebiger Amplitude und Frequenz, mit Viersegmentschaltern als in drei Schaltergruppen zusammengefaßten Hauptschaltern ($S_{11}$, $S_{12}$, $S_{13}$, $S_{21}$, $S_{22}$, $S_{23}$, $S_{31}$, $S_{32}$, $S_{33}$) vorgeschlagen. Den Hauptschaltern liegt jeweils eine Resonanzkapazität ($C_{r11}$, $C_{r12}$, $C_{r13}$, $C_{r21}$, $C_{r22}$, $C_{r23}$, $C_{r31}$, $C_{r32}$, $C_{r33}$) parallel oder die Ausgangs- kapazität der Leistungshalbleiter der Hauptschalter wirkt als Resonanzkapazität. Zwischen den dreiphasigen Ausgangsanschlüssen der Schaltergruppen ist jeweils eine Hilfskommutierungseinrichtung mit einem als Viersegmentschalter ausgebildeten Hilfsschalter ($AS_{31}$, $AS_{32}$, $AS_{12}$) und in Serie hierzu geschalteter Resonanzinduktivität ($L_{r3}$, $L_{r2}$, $L_{r1}$) vorgesehen.

Fig.1

EP 0 833 431 A2

**Beschreibung**

Die Erfindung bezieht sich auf einen dreiphasigen Matrix-Stromrichter gemäß dem Oberbegriff des Anspruchs 1 sowie auf ein Verfahren zum Betrieb. Die Erfindung kann beispielsweise bei drehzahlgesteuerten Industrieantrieben mit Asynchron- oder Synchronmotoren verwendet werden.

Der dreiphasige Matrix-Stromrichter zur einstufigen Leistungsumwandlung einer dreiphasigen Wechselspannung bestimmter vorgegebener Amplitude und vorgegebener Frequenz in eine dreiphasige Wechselspannung variabler Amplitude und variabler Frequenz ist eine Alternative zu hart und weich schaltenden Stromrichtern mit Gleichspannungszwischenkreis (siehe beispielsweise M.G.B. Venturini and A. Alesina, „Intrinsic Amplitude Limits and Optimum Design of 9-Switches Direct PWM-AC-AC Converters", Conf. Rec. IEEE-PESC, 1988, pp. 1284 - 1291). Unter einem hart bzw. weich schaltenden Stromrichter wird dabei ein Stromrichter verstanden, bei dessen Schaltvorgängen (Kommutierungsvorgängen) relativ viel bzw. wenig Verlustleistung produziert wird. Die Weiterentwicklung des Matrix-Sromrichters ist durch die Implementierung der Raumvektormodulation, die Verwendung des Matrix-Stromrichters in Antrieben mit Feldorientierung und die Verwendung von rückwärts sperrfähigen IGBT's in den benötigten Vierquadrantenschaltern gekennzeichnet.

Der Matrix-Stromrichter hat verschiedene Vorteile gegenüber konventionellen, hart schaltenden PWM-Gleichrichter/Gleichspannungszwischenkreis/Wechselrichter-Strukturen, z.B. benötigt der Matrix-Stromrichter aufgrund seiner einstufigen Leistungsumwandlung keine Kapazität im Zwischenkreis. Außerdem verursacht er weniger Verluste als die vergleichbare Struktur mit Gleichspannungszwischenkreis, da die Kommutierungsspannung des Matrix-Stromrichters wesentlich geringer ist als diejenige des konventionellen Stromrichters mit Gleichspannungszwischenkreis. Obwohl der Stromrichter mit Gleichspannungszwischenkreis nur 24 Leistungshalbleiter benötigt (z.B. 12 IGBT's und 12 Dioden) und der Matrix-Stromrichter 36 Halbleiter benötigt (z.B. 18 IGBT's und 18 Dioden), ist die installierte gesamte Schalterleistung beider Stromrichter im allgemeinen wegen der möglichen Reduktion der Nennströme der Schalter im Matrix-Stromrichter um ein Drittel die gleiche.

Jedoch limitieren die substantiellen Schaltverluste die maximale Schaltfrequenz von hart schaltenden Stromrichtern allgemein auf etwa 10 bis 25 kHz im mittleren Leistungsbereich, wenn beispielsweise IGBT's verwendet werden. Vergrößerte Fall- und Tailzeiten bei Hochspannungs-Leistungshalbleiterbauelementen, wie z.B. GTO's, IGBT's und MCT's verstärken diesen Effekt noch mehr in Hochleistungsanwendungen, was entweder zu sehr voluminösen und sehr teuren Filterkomponenten oder zu höheren Motorverlusten in einem als Last eingesetzten Antrieb führt.

Der Erfindung liegt die Aufgabe zugrunde, einen dreiphasigen Matrix-Stromrichter der eingangs genannten Art anzugeben, der eine höhere Leistungsdichte aufweist, einen höheren Wirkungsgrad besitzt und höhere Schaltfrequenzen ermöglicht. Des weiteren soll ein Verfahren zum Betrieb angegeben werden.

Die Aufgabe wird hinsichtlich des Matrix-Stromrichters in Verbindung mit den Merkmalen des Oberbegriffes erfindungsgemäß durch die im Kennzeichen des Anspruchs 1 angegebenen Merkmale gelöst. Die Lösung hinsichtlich des Verfahrens zum Betrieb ist im Anspruch 5 gekennzeichnet.

Die mit der Erfindung erzielbaren Vorteile bestehen insbesondere darin, daß der erfindungsgemäße dreiphasige quasiresonante Matrix-Stromrichter wesentlich geringere Schalt- und Gesamtverluste als der hart schaltende Matrix-Stromrichter bei mittleren und hohen Schaltfrequenzen realisiert. Es werden spezielle Pulsmuster und zusätzliche Hilfskommutierungseinrichtungen verwendet, wobei die zusätzlichen Hilfskommutierungseinrichtungen aus drei Vierquadrantenschaltern und drei Resonanzinduktivitäten bestehen, die weiches Schalten des gesamten Stromrichters und PWM-Steuerung ermöglichen. Folglich können vorteilhaft die Hauptschalter des Matrix-Stromrichters als Nullspannungsschalter (ZVS =zero voltage switch) und die Hilfsschalter der Hilfskommutierungseinrichtungen als Nullstromschalter (ZCS = zero current switch) betrieben werden.

Weil die Hilfsschalter nur sehr kurze Strompulse führen, können die Nennströme dieser Schalter im Vergleich zu den Nennströmen der Hauptschalter reduziert werden. Der erfindungsgemäße quasiresonante Matrix-Stromrichter ist eine vorteilhafte Alternative zu hart und weich schaltenden PWM-Gleichrichter/Gleichspannungszwischenkreis/Wechselrichter-Strukturen für Hochleistungsanwendungen.

Die Erfindung wird nachstehend anhand der in der Zeichnung dargestellten Ausführungsbeispiele erläutert. Es zeigen:

Fig. 1 die Schaltungskonfiguration des quasiresonanten dreiphasigen Matrix-Stromrichters,
Fig. 2 ein Ersatzschaltbild,
Fig. 3 die Definition von 60°-Spannungsintervallen der Eingangsspannungen,
Fig. 4 eine Tabelle der Pulsmuster bzw. der Schaltreihenfolgen des quasiresonanten Matrix-Stromrichters,
Fig. 5 Strom- und Spannungsverläufe einer ARCP-Kommutierung,
Fig. 6 Schalterspannungen und Schaltergruppenstrom der ersten Schaltergruppe des quasiresonanten Matrix-Stromrichters,
Fig. 7 Schalterspannung, Schaltzustandsvariable für den Zustand eines Hauptschalters und Ausgangsstrom beim quasiresonanten Matrix-Stromrichter,

Fig. 8 Schaltergruppenströme der drei Schaltergruppen des quasiresonanten Matrix-Stromrichters,

Fig. 9 Eingangsstrom und Ausgangsspannung des quasiresonanten Matrix-Stromrichters.

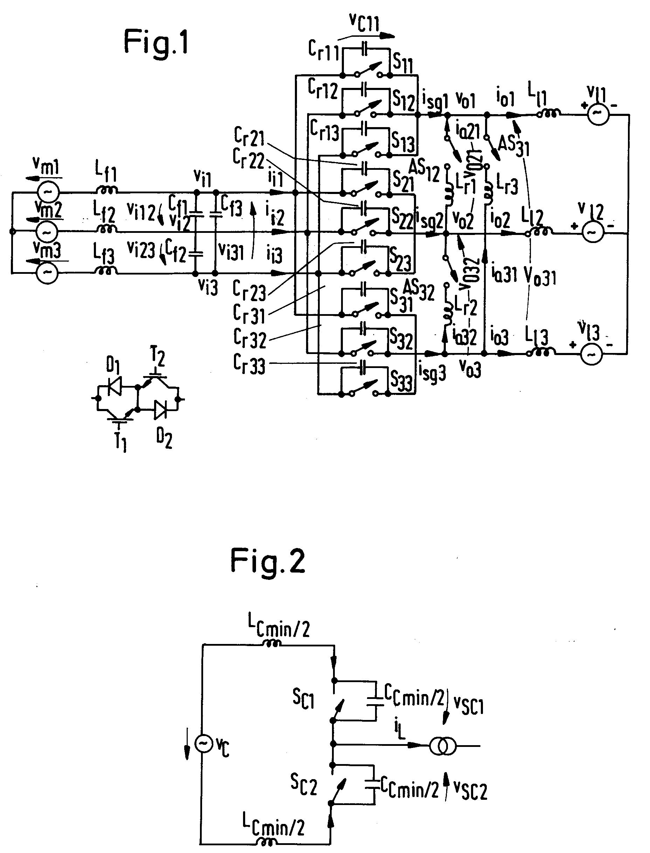

In Fig. 1 ist die Schaltungskonfiguration des dreiphasigen quasiresonanten Matrix-Stromrichters dargestellt. Ein dreiphasiges Filter mit Filterinduktivitäten $L_{f1}$ bzw. $L_{f2}$ bzw. $L_{f3}$ in den Netzphasen und Filterkapazitäten $C_{f1}$ bzw. $C_{f2}$ bzw. $C_{f3}$ zwischen den Phasen liegt einerseits am dreiphasigen Netz mit den Netzspannungen $v_{m1}$, $v_{m2}$, $v_{m3}$ und andererseits an drei jeweils dreiphasigen Schaltergruppen des Matrix-Stromrichters. Die auf den Sternpunkt des Netzes bezogenen Eingangsspannungen der drei Schaltergruppen betragen $v_{i1}$, $v_{i2}$, $v_{i3}$ (allgemein mit $v_i$ bezeichnet) und die verketteten Eingangsspannungen $v_{i12}$, $v_{i23}$, $v_{i31}$. Die Eingangsströme der Schaltergruppen sind mit $i_{i1}$, $i_{i2}$, $i_{i3}$ bezeichnet.

Die erste Schaltergruppe weist drei jeweils mit einer eingangsseitigen Netzphase verbundene Hauptschalter $S_{11}$, $S_{12}$, $S_{13}$ auf. Den Hauptschaltern liegen Resonanzkapazitäten $C_{r11}$, $C_{r12}$, $C_{r13}$ parallel. Die Schalterspannungen (= Spannungen an den Resonanzkapazitäten) betragen $v_{C11}$, $v_{C12}$, $v_{C13}$ (teilweise nicht dargestellt). Die Ausgänge der Hauptschalter $S_{11}$, $S_{12}$, $S_{13}$ sind miteinander verbunden, wobei der über den gemeinsamen Ausgang fließende Schaltergruppenstrom mit $i_{sg1}$ und die Ausgangsspannung dieser ersten Schaltergruppe mit $v_{o1}$ bezeichnet sind.

Die zweite Schaltergruppe weist ebenfalls drei jeweils mit einer eingangsseitigen Netzphase verbundene Hauptschalter $S_{21}$, $S_{22}$, $S_{23}$ auf. Den Hauptschaltern liegen Resonanzkapazitäten $C_{r21}$, $C_{r22}$, $C_{r23}$ parallel. Die Ausgänge der Hauptschalter $S_{21}$, $S_{22}$, $S_{23}$ sind miteinander verbunden, wobei der über den gemeinsamen Ausgang fließende Schaltergruppenstrom mit $i_{sg2}$ und die Ausgangsspannung dieser zweiten Schaltergruppe mit $v_{o2}$ bezeichnet sind. Die Schalterspannungen betragen $v_{C21}$, $v_{C22}$, $v_{C23}$ (nicht dargestellt).

Die dritte Schaltergruppe weist ebenfalls drei jeweils mit einer Netzphase verbundene Hauptschalter $S_{31}$, $S_{32}$, $S_{33}$ auf. Den Hauptschaltern liegen Resonanzkapazitäten $C_{r31}$, $C_{r32}$, $C_{r33}$ parallel. Die Ausgänge der Hauptschalter $S_{31}$, $S_{32}$, $S_{33}$ sind miteinander verbunden, wobei der über den gemeinsamen Ausgang fließende Schaltergruppenstrom mit $i_{sg3}$ und die Ausgangsspannung dieser zweiten Schaltergruppe mit $v_{o3}$ bezeichnet sind. Die Schalterspannungen betragen $v_{C31}$, $v_{C32}$, $v_{C33}$ (nicht dargestellt).

Die Ausgänge der ersten und dritten Schaltergruppe sind miteinander über einen Hilfsschalter $AS_{31}$ einer Hilfskommutierungseinrichtung mit seriengeschalteter Resonanzinduktivität $L_{r3}$ verbindbar. Der Strom über diese Hilfskommutierungseinrichtung ist mit $i_{a31}$ bezeichnet.

Die Ausgänge der ersten und zweiten Schaltergruppe sind miteinander über einen Hilfsschalter $AS_{12}$ einer Hilfskommutierungseinrichtung mit seriengeschalteter Resonanzinduktivität $L_{r1}$ verbindbar. Der Strom über diese Hilfskommutierungseinrichtung ist mit $i_{a21}$ bezeichnet.

Die Ausgänge der zweiten und dritten Schaltergruppe sind miteinander über einen Hilfsschalter $AS_{32}$ einer Hilfskommutierungseinrichtung mit seriengeschalteter Resonanzinduktivität $L_{r2}$ verbindbar. Der Strom über diese Hilfskommutierungseinrichtung ist mit $i_{a32}$ bezeichnet.

Die Spannungen an den Hilfskommutierungseinrichtungen sind mit $v_{021}$, $v_{032}$, $v_{031}$ bezeichnet.

Die Verbindungspunkte der Hilfskommutierungseinrichtungen mit den Ausgängen der drei Schaltergruppen bilden die Lastanschlüsse des dreiphasigen Matrix-Stromrichters, über die Ausgangsströme $i_{o1}$ bzw. $i_{o2}$ bzw. $i_{o3}$ fließen (die Ausgangsgrößen sind allgemein mit o bezeichnet). Die Lastinduktivitäten betragen $L_{l1}$ bzw. $L_{l2}$ bzw. $L_{l3}$ und die Lastspannungen betragen $v_{l1}$ bzw. $v_{l2}$ bzw. $v_{l3}$.

Sowohl die Resonanzkapazitäten $C_{r11}$ bis $C_{r33}$ als auch die Resonanzinduktivitäten $L_{r1}$ bis $L_{r3}$ weisen vorzugsweise jeweils die gleichen Werte auf.

Falls die Ausgangskapazität der Leistungshalbleiter der Hauptschalter ausreichend groß ist, kann auf die Resonanzkapazitäten verzichtet werden.

Im linken Abschnitt der Fig. 1 ist beispielhaft der Aufbau eines Hauptschalters (Viersegmentschalters) $S_{11}$, $S_{12}$, $S_{13}$, $S_{21}$, $S_{22}$, $S_{23}$, $S_{31}$, $S_{32}$, $S_{33}$ (allgemein S) sowie eines Hilfsschalters (Viersegmentschalter) $AS_{31}$, $AS_{12}$, $AS_{32}$ (allgemein AS) dargestellt. Wie zu erkennen ist, besteht der Viersegmentschalter aus zwei IGBT-Halbleitern $T_1$, $T_2$ und zwei Inversdioden $D_1$, $D_2$, wobei sowohl $D_1$ und $T_1$ als auch $D_2$ und $T_2$ jeweils parallelgeschaltet sind und beide Parallelschaltungen in Serie liegen. Die zwei IGBT-Halbleiter und Inversdioden zur Bildung des Hilfsschalters AS sind für wesentlich kleinere Nennströme zu bemessen als die Baukomponenten zur Realisierung der Hauptschalter.

Alternativ können die Viersegmenthauptschalter S auch auf der Basis von anderen aktiv ausschaltbaren Leistungshalbleiterbauelementen (wie z.B. GTO's, MOSFET's, Bipolartransistoren oder MCT's) sowie gegebenenfalls notwendigen Dioden realisiert werden. Im Gegensatz dazu kann der Hilfsschalter AS alternativ unter Verwendung aktiv einschaltbarer Leistungshalbleiterbauelemente (wie z.B. Thyristoren, GTO's, MCT's, MOSFET's oder Bipolartransistoren) sowie der gegebenenfalls notwendigen Dioden verwirklicht werden. Im oberen Leistungsbereich ist insbesondere der Einsatz von zwölf sperrfähigen GTO's in den Hauptschaltern sowie zwei sperrfähigen GTO's oder zwei sperrfähigen schnellen Thyristoren mit reduzierten Nennströmen im Hilfsschalter möglich, wobei jeweils zwei GTO-Thyristoren bzw. zwei schnelle Thyristoren parallelgeschaltet sind.

EP 0 833 431 A2

Die Kommutierung des Stromes einer Ausgangsphase eines hart schaltenden Stromrichters von einem Schalter zu einem anderen innerhalb einer Schaltergruppe kann durch das Ersatzschaltbild gemäß Fig. 2 einfach beschrieben werden. Das Ersatzschaltbild zeigt die von einer Kommutierungsspannung $v_C$ beaufschlagte Reihenschaltung von $L_{Cmin}/2$, Schalter SC1, Schalter SC2 und $L_{Cmin}/2$. Jedem Schalter liegt $C_{cmin}/2$ parallel. Am Verbindungspunkt beider Schalter liegt der Anschluß für die Last. Im Ersatzschaltbild repräsentiert der Laststrom $i_L$ den Motorphasenstrom, die Kommutierungsspannung $v_c$ repräsentiert die wirksame verkettete Spannung am Eingang und die minimalen Werte der Kommutierungsinduktivität $L_{Cmin}$ und der Kommutierungskapazität $C_{Cmin}$ eines hart schaltenden Matrix-Stromrichters sind durch die Streuinduktivität des Schaltkreises und die Ausgangskapazität der Leistungshalbleiter gegeben.

Entsprechend der an der Last (Motor) umgesetzten Leistung können zwei grundlegende Arten der Kommutierung unterschieden werden. Die sogenannte induktive Kommutierung (natürliche Kommutierung mit einem aktiven Einschaltvorgang) und die kapazitive Kommutierung (erzwungene Kommutierung mit einem aktiven Ausschaltvorgang). Wenn die Spannung $v_c$ und der Strom $i_L$ positiv sind und der Schalter SC2 eingeschaltet ist, dann kann eine induktive Kommutierung nur durch einen aktiven Einschaltvorgang des Schalters SC1 eingeleitet werden. Da nahezu die gesamte Spannung über dem Schalter SC1 abfällt, gibt es in dem einschaltenden Schalter (IGBT) substantielle Einschaltverluste und der Schaltvorgang wird hart genannt. Die Kommutierung wird durch das passive Ausschalten des Schalters SC2 während des Rückstromabrisses vervollständigt.

Wenn der Schalter SC1 eingeschaltet ist und sowohl die Kommutierungsspannung $v_c$ als auch der Laststrom $i_L$ positiv sind, kann eine kapazitive Kommutierung nur durch einen aktiven Ausschaltvorgang des Schalters SC1 erreicht werden. Weil die Kommutierungsinduktivität $L_C$ und die Kommutierungskapazität $C_C$ jeweils ihren minimalen Wert $L_{Cmin}$ und $C_{Cmin}$ aufweisen, steigt die Spannung $v_{SC1}$ über dem Schalter SC1 folglich an, während die Spannung $v_{SC2}$ über dem Schalter SC2 sinkt, bis der Schalter SC2 passiv bei Nullspannung einschaltet. Die Stromkommutierung kann erst nach diesem Zeitpunkt starten und dieser Prozeß verursacht Ausschaltverluste im ausschaltenden Schalter (IGBT). Deshalb ist auch der aktive Ausschaltvorgang einer solchen kapazitiven Kommutierung ein harter Schaltvorgang.

Weil sowohl die Kommutierungsspannung (die verkettete Eingangsspannung) und der Laststrom (der Motorstrom einer Phase) die Polarität während des Betriebes des Matrix-Stromrichters ändern, müssen alle Hauptschalter vorwärts und rückwärts sperrfähige, bidirektional leitfähige Schalter sein (Vierquadrantenschalter).

Eine Reduktion der hohen Schaltverluste wird erreicht, wenn anstelle des hart schaltenden Matrix-Stromrichters der erfindungsgemäße quasiresonante Matrix-Stromrichter verwendet wird. Bei diesem gibt es vorteilhaft nur kapazitive Kommutierungen zwischen den Hauptschaltern des Matrix-Stromrichters. Folglich können diese Schalter vorteilhaft als Nullspannungsschalter betrieben werden und der Ausschaltvorgang kann durch eine Vergrößerung der Kommutierungskapazität (Kommutierungskapazität $C_C > C_{Cmin}$; Kommutierungsinduktivität $L_C = L_{Cmin}$) entlastet werden. Im Gegensatz dazu führen die Hilfsschalter nur induktive Schaltvorgänge aus, die durch eine Vergrößerung der Kommutierungsinduktivität (Kommutierungsinduktivität $L_C > L_{Cmin}$; Kommutierungskapazität $C_C = C_{Cmin}$) entlastet werden. Deshalb arbeiten diese Schalter vorteilhaft als Nullstromschalter.

In M.G.B. Venturini and A. Alesina, „Intrinsic Amplitude Limits and Optimum Design of 9-Switches Direct PWM-AC-AC Converters", Conf. Rec. IEEE-PESC, 1988, pp. 1284 - 1291 ist ein Steuerungsprinzip für einen Matrix-Stromrichter abgeleitet, das sinusförmige Eingangsströme bei einstellbarem Leistungsfaktor garantiert und bei dem das maximal mögliche Spannungsübersetzungsverhältnis 0,866 beträgt. Weil dieser grundlegende Algorithmus nur die Tastverhältnisse der Vierquadrantenschalter bestimmt, hat man in einem hart schaltenden Matrix-Stromrichter immer noch den Freiheitsgrad, optimale Pulsmuster (Schaltreihenfolge der Ventile) zu wählen. Im Falle des erfindungsgemäßen, quasiresonanten Matrix-Stromrichters wird die Schaltreihenfolge durch die Funktion der Hilfskommutierungseinrichtungen festgelegt. Wenn man symmetrische Eingangsspannungen

$$v_{i1} = V_i \cdot \cos(\omega_i t + \theta_i)$$

$$v_{i2} = V_i \cdot \cos(\omega_i t + \theta_i - 120°)$$

$$v_{i3} = V_i \cdot \cos(\omega_i t + \theta_i + 120°)$$

voraussetzt, worin Netz-Kreisfrequenz

$$\omega_i = 2 \cdot \pi \cdot f_i = \frac{2 \cdot \pi}{T_i} ,$$

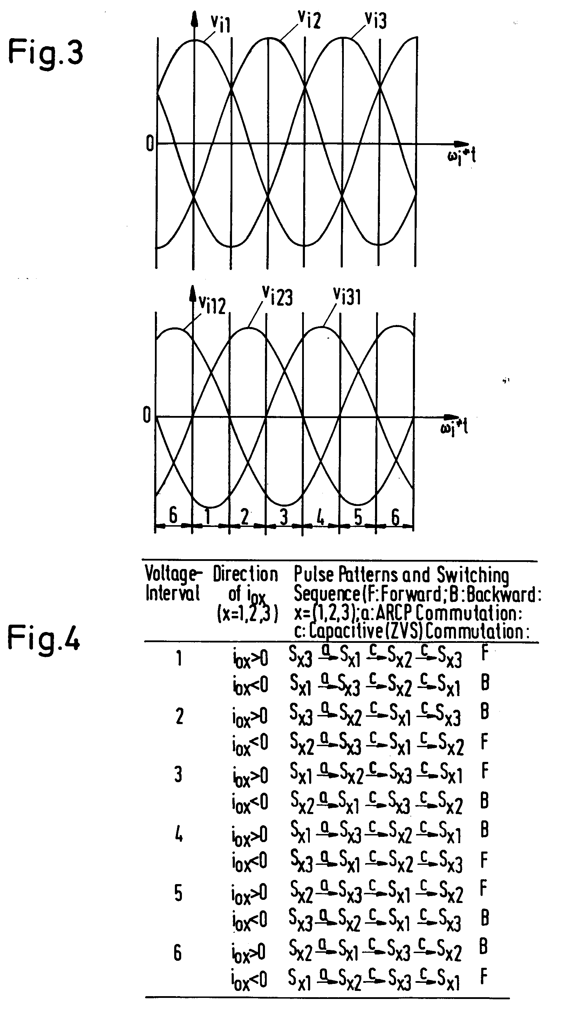

$V_i$ = Amplitude, $\theta_i$ = Verschiebungswinkel, $f_i$ = Netzfrequenz, $T_i$ = Netz-Periodendauer (allgemein bezeichnet i die Eingangsgrößen), so ermöglicht das dreiphasige Spannungssystem die Definition von sechs 60°-Spannungsintervallen (voltage-interval) 1, 2, 3, 4, 5, 6, in denen keine der drei verketteten Eingangsspannungen $v_{i12}$, $V_{i23}$ und $V_{i31}$ die Polarität ändert. In Fig. 3 sind diese sechs Spannungsintervalle an Hand der Verläufe von $v_{i1}$, $v_{i2}$, $v_{i3}$ bzw. $v_{i12}$, $v_{i23}$, $v_{i31}$

4

gezeigt. Für $\theta_i=0°$ sind die Spannungsintervalle gegeben durch:

Spannungsintervall 1: $0°\leq \omega_i\, t \leq 60°$
Spannungsintervall 2: $60°\leq \omega_i\, t \leq 120°$
Spannungsintervall 3: $120°\leq \omega_i\, t \leq 180°$
Spannungsintervall 4: $180°\leq \omega_i\, t \leq 240°$
Spannungsintervall 5: $240°\leq \omega_i\, t \leq 300°$
Spannungsintervall 6: $300°\leq \omega_i\, t \leq 360°$

Bei der Tabelle gemäß Fig. 4 ist die Schaltreihenfolge (switching sequence) „vorwärts" mit F (Kommutierung von $S_{11}$ zu $S_{12}$ zu $S_{13}$ zu $S_{11}$ usw. und von $S_{31}$ zu $S_{32}$ zu $S_{33}$ zu $S_{31}$ usw.) und die Schaltreihenfolge „rückwärts" mit B (Kommutierung von $S_{11}$ zu $S_{13}$ zu $S_{12}$ zu $S_{11}$ usw. und von $S_{31}$ zu $S_{33}$ zu $S_{32}$ zu $S_{31}$ usw.) bezeichnet. Eine ARCP-Kommutierung ist mit a und eine natürliche kapazitive (ZVS) Kommutierung ist mit c bezeichnet. Die hinsichtlich der Ausgangsströme $i_{ox}$ und der Hauptschalter $S_{x1}$, $S_{x2}$, $S_{x3}$ eingesetzten Variablen x können die Werte 1, 2, 3 annehmen.

Die in Fig. 4 dargestellte Tabelle des Pulsmusters (pulse patterns) zeigt, daß es stets eine Schaltreihenfolge gibt, die zwei kapazitive und eine ARCP-Kommutierung (ARPC = Auxiliary Resonant Commutated Pole Kommutierung) in jeder Periodendauer $T_S$ der Schaltfrequenz $f_S$ ermöglicht. Eine ARCP-Kommutierung ist eine induktive Kommutierung, die unter Einsatz einer bzw. zweier Hilfskommutierungseinrichtungen in eine kapazitive Kommutierung transformiert wurde. Die Transformation wird durch die Hilfskommutierungseinrichtungen erzielt, welche die Polarität der Schalterströme vor den aktiven Schaltvorgängen der Hauptschalter ändern. Wenn der Ausgangsstrom seine Polarität nicht ändert, kehrt sich die Schaltreihenfolge in jedem 60°-Spannungsintervall um. Wenn man symmetrische Ausgangsströme voraussetzt

$$i_{O1}=i_O \cdot \cos(\omega_O t +\theta_O), \tag{3}$$

$$i_{O2}=i_O \cdot \cos(\omega_O t +\theta_O -120°),$$

$$i_{O3}=i_O \cdot \cos(\omega_O t +\theta_O +120°),$$

mit $i_0$ = Amplitude
$\omega_o$ = Ausgangs-Kreisfrequenz
$\theta_0$ = Ausgangs-Verschiebungswinkel

so haben die Schaltergruppen mit der gleichen Polarität des Ausgangsstroms $i_{ox}$ (x=1, 2, 3) immer die entgegengesetzte Schaltreihenfolge im Vergleich zur weiteren Schaltergruppe. Außerdem ist die Kommutierungsspannung der ARCP-Kommutierung immer die betragsmäßig größte verkettete Eingangsspannung.

Es wird nachfolgend gezeigt, daß dies eine sehr günstige Eigenschaft ist, die die Auslegung und die Betriebsweise des erfindungsgemäßen quasiresonanten Matrix-Stromrichters erheblich vereinfacht. Die Realisierung der ARCP-Kommutierung in allen drei Schaltergruppen benötigt jedoch nicht nur die Verwendung der in der Tabelle gemäß Fig. 4 aufgeführten Schaltreihenfolgen, sondern auch die Synchronisation der drei ARCP-Kommutierungen in den drei Schaltergruppen während jeder Periodendauer $T_S$ der Schaltfrequenz. Wenn die in der Tabelle angegebenen Pulsmuster (Schaltreihenfolgen) verwendet werden, so leitet beispielsweise die Schaltergruppe mit dem kürzesten Tastverhältnis der drei anfänglich leitenden Schalter (ein Schalter in jeder Schaltergruppe) die ARCP-Kommutierung in allen drei Schaltergruppen ein. Die übrigbleibenden Tastverhältnisanteile der Schaltergruppen mit den längeren Tastverhältnissen werden dann am Ende der Periodendauer $T_S$ der Schaltfrequenz realisiert.

Wenn jedoch der Ausgangszustand der in der Tabelle gemäß Fig. 4 angegebenen Schaltreihenfolge so geändert wird, daß zunächst die zwei kapazitiven Kommutierungen realisiert werden, so ist es möglich, die ARCP-Kommutierungen der drei Schaltergruppen auch am Ende der Periodendauer $T_S$ zu synchronisieren. Weil beide vorgeschlagenen Pulsmuster zwei Drittel kapazitive und nur ein Drittel ARCP-Kommutierungen realisieren, differieren sie substantiell von konventionellen Schaltmustern für hart schaltende Matrix-Stromrichter, die in der Regel 50% induktive und 50% kapazitive Kommutierungen aufweisen.

Wenn die vorstehend beschriebenen Pulsmuster in jedem der sechs Spannungsintervalle der Eingangsspannung verwendet werden, so gibt es zwei kapazitive Kommutierungen und eine ARCP-Kommutierung in jeder Schaltergruppe pro Periodendauer $T_S$ der Schaltfrequenz. Folglich schalten alle Hauptschalter $S_{11}$ bis $S_{33}$ des Matrix-Stromrichters ausschließlich aktiv aus und sie schalten passiv bei einer Spannung Null ein (d.h. sie sind Nullspannungsschalter ZVS). In gleicher Weise schalten alle Hilfsschalter $AS_{12}$, $AS_{32}$ und $AS_{31}$ aktiv ein und schalten passiv mit dem Rückstromabriß aus (d.h. sie sind Nullstromschalter ZCS).

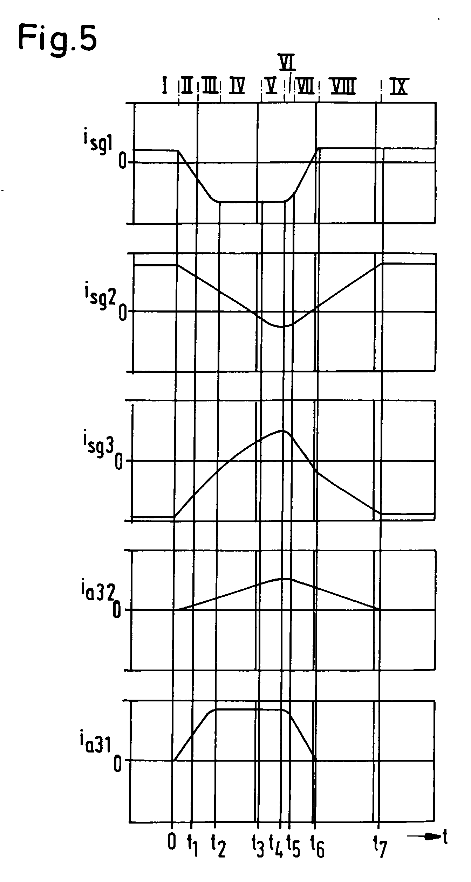

Nachfolgend wird das ARCP-Kommutierungsprinzip beschrieben, welches eine natürliche induktive Kommutierung in eine kapazitive Kommutierung durch eine Veränderung der Polarität der Schalterströme transformiert. Um die Erläuterungen zu vereinfachen, wird vorausgesetzt, daß die verketteten Eingangsspannungen $v_{i12}$, $v_{i23}$, $v_{i31}$ und die Ausgangsströme $i_{O1}$, $i_{O2}$, $i_{O3}$ während der Kommutierung konstant sind. Außerdem werden die Schalter als ideal vorausgesetzt. Der erfindungsgemäße quasiresonante Matrix-Stromrichter soll im sechsten Spannungsintervall betrieben werden und es sollen die Pulsmuster, die in der Tabelle gemäß Fig. 4 dargestellt sind, für die Ausgangsströme $i_{O1}>0$, $i_{O2}>0$ und $i_{O3}<0$ verwendet werden. Fig. 5 zeigt die sich in den einzelnen Intervallen I, II, III, IV, V, VI, VII, VIII, IX ergebenden Stromverläufe ($i_{sg1}$, $i_{sg2}$, $i_{sg3}$, $i_{a32}$, $i_{a31}$) einer ARCP-Kommutierung:

Intervall I (t < 0):

Der quasiresonante Matrix-Stromrichter arbeitet im Intervall I in der in Fig. 5 gezeigten Ausgangsposition. Die Hauptschalter $S_{12}$, $S_{22}$ und $S_{31}$ führen die Ausgangsströme $i_{O1}$, $i_{O2}$ und $i_{O3}$ und alle Hilfsschalter AS sind geöffnet.

Intervall II ($0 \leq t \leq t_1$; bei t=0 erfolgt das Einschalten der Hilfsschalter $AS_{32}$ und $AS_{31}$, bei $t=t_1$ erfolgt das Ausschalten des Hauptschalters $S_{12}$):

Das Intervall II wird eingeleitet durch die gleichzeitigen Einschaltvorgänge der Hilfsschalter $AS_{32}$ und $AS_{31}$. Die Ströme in den Hilfskommutierungszweigen wachsen linear gemäß

$$i_{a31} = i_{a32} = \frac{|v_{i12}| \cdot t}{L_r}, \tag{4}$$

wobei $L_r = L_{r3}$ oder $L_{r2}$.

Dieser Stromanstieg wird durch die positiven Spannungen $v_{O31} = v_{O32} = v_{i12}$ über den Hilfskommutierungseinrichtungen verursacht. Die absoluten Werte der Schaltergruppenströme

$$i_{sg1} = i_{o1} - i_{a31} \tag{5}$$

$$i_{sg2} = i_{O2} - i_{a32}$$

$$i_{sg3} = i_{O3} + i_{a31} + i_{a32}$$

nehmen ab. Der Strom $i_{sg1}$ ändert seine Polarität und erreicht den negativen Booststrom $-i_b$ zur Zeit $t_1$.

Intervall III ($t_1 \leq t \leq t_2$; bei $t_1$ erfolgt der Ausschaltvorgang von $S_{12}$ bei $t_2$ erfolgt der Einschaltvorgang von $S_{11}$):

Das Intervall III beginnt bei $t_1$, wenn der leitende Schalter $S_{12}$ aktiv ausgeschaltet wird. Der Strom $i_{sg1}$ kommutiert in die drei parallelen Kapazitäten der ersten Schaltergruppe und lädt diese während eines Schwingungsvorganges mit der Resonanzinduktivät $L_{r3}$ um. Die Spitzenströme der ersten Schaltergruppe und des Hilfsschalters $AS_{31}$ erreichen

$$i_{a31}(t_2) \approx i_{O1} + i_b + \frac{|v_{i12}|}{\sqrt{\dfrac{L_r}{3 \cdot C_r}}}, \tag{6}$$

$$i_{sg1}(t_2) \approx -i_b - \frac{|v_{i12}|}{\sqrt{\dfrac{L_r}{3 \cdot C_r}}},$$

wobei $C_r = C_{r11}$ oder $C_{r12}$ oder $C_{r13}$, $L_r = L_{r3}$, \tag{7}

wenn $i_b$ klein ist ($i_b \approx 0$). Zum Zeitpunkt $t_2$ schaltet der Hauptschalter $S_{11}$ passiv bei einer Schalterspannung Null ein.

Intervall IV ($t_2 \leq t \leq t_3$; bei $t_2$ erfolgt der Einschaltvorgang von $S_{11}$, bei $t_3$ erfolgt der Ausschaltvorgang von $S_{22}$):

Da $S_{11}$ bei $t_2$ zu Beginn des Intervalls IV einschaltet, ist die Spannung $v_{031}$ über der Hilfskommutierungseinrichtung zwischen der ersten Phase und der dritten Phase Null. Folglich fließen die Ströme $i_{sg1}$ und $i_{a31}$ in einem Freilaufkreis über die Hauptschalter $S_{11}$ und $S_{31}$ und bleiben konstant. Die sich linear ändernden Ströme $i_{sg2}$ und $i_{sg3}$ ändern ihre Polarität und $i_{sg2}$ erreicht den negativen Booststrom $-i_b$ bei $t_3$.

Intervall V ($t_3 \leq t \leq t_4$; bei $t_3$ erfolgt der Ausschaltvorgang von $S_{22}$; bei $t_4$ erfolgen der Einschaltvorgang von $S_{21}$ und der Ausschaltvorgang von $S_{31}$):

Die Betriebsweise im Intervall V wird durch den aktiven Ausschaltvorgang von $S_{22}$ bei $t_3$ verursacht, wobei der Strom $i_{sg2}$ in die drei Kapazitäten der zweiten Schaltergruppe kommutiert und diese während eines Schwingungsvorganges umlädt. Die Ströme erreichen

$$i_{sg2}(t_4) \approx -i_b - \frac{|v_{i12}|}{\sqrt{\frac{L_r}{3 \cdot C_r}}},$$

wobei $C_r = C_{r21}$ oder $C_{r22}$ oder $C_{r23}$, $L_r = L_{r2}$, $\hspace{2cm}$ (8)

$$i_{sg3}(t_4) \approx 2 \cdot \left( i_b + \frac{v_{i12}}{\sqrt{\frac{L_r}{3 \cdot C_r}}} \right),$$

wobei $C_r = C_{r21}$ oder $C_{r22}$ oder $C_{r23}$ oder $C_{r11}$ oder $C_{r12}$ oder $C_{r13}$, $L_r = L_{r2}$ oder $L_{r3}$, $\hspace{1cm}$ (9)

wenn $i_b \approx 0$ ist und $S_{21}$ passiv bei einer Schalterspannung Null einschaltet.

Intervall VI ($t_4 \leq t \leq t_5$: bei $t_4$ erfolgen der Einschaltvorgang von $S_{21}$ und der Ausschaltvorgang von $S_{31}$; bei $t_5$ erfolgt der Einschaltvorgang von $S_{32}$):

Das Intervall VI wird durch einen aktiven Ausschaltvorgang des Schalters $S_{31}$ eingeleitet. Der Strom $i_{sg3}$ kommutiert in die drei Kapazitäten der dritten Schaltergruppe und lädt diese um, bis der Schalter $S_{32}$ passiv bei einer Schalterspannung Null einschaltet.

Intervall VII ($t_5 \leq t \leq t_6$; bei $t_5$ erfolgt der Einschaltvorgang von $S_{32}$, bei $t_6$ erfolgt der Ausschaltvorgang von $AS_{31}$):

Die Spannung $v_{031} = v_{032} = -v_{i12}$ über den zwei aktiven Hilfskommutierungseinrichtungen verursacht einen linearen Abfall der Ströme

$$i_{a31} = i_{a31}(t_5) - \frac{|v_{i12}| \cdot t}{L_r},$$

wobei $L_r = L_{r3}$, $\hspace{2cm}$ (10)

$$i_{a32} = i_{a32}(t_5) - \frac{|v_{i12}| \cdot t}{L_r},$$

wobei $L_r = L_{r2}$. $\hspace{2cm}$ (11)

Folglich ändern die Ströme $i_{sg1}$, $i_{sg2}$ und $i_{sg3}$ ihre Polarität entsprechend den Gleichungen (5).

Intervall VIII ($t_6 \leq t \leq t_7$: bei $t_6$ erfolgt der Ausschaltvorgang von $AS_{31}$, bei $t_7$ erfolgt der Ausschaltvorgang von $AS_{32}$): Bei $t_6$ und $t_7$ erreichen die Ströme

$$i_{a31}(t_6) = 0 \hspace{2cm} (12)$$

$$i_{a32}(t_7) = 0 \hspace{2cm} (13)$$

den Wert Null und die Schalter $AS_{31}$ und $AS_{32}$ schalten passiv bei einem Strom Null als Nullstromschalter aus.

Intervall IX ($t_7 \leq t$; bei $t_7$ erfolgt der Ausschaltvorgang von $AS_{32}$):

Der Schaltzustand des Intervalls IX wird erreicht, wenn $AS_{32}$ zum Zeitpunkt $t_7$ ausschaltet.

Während der ARCP Kommutierung kommutierte der Strom von den Schaltern $S_{x2}$ auf die Schalter $S_{x1}$ (x=1,2) und von den Schaltern $S_{x1}$ auf die Schalter $S_{x2}$ (x=3). Es ist auch eine Überlappung der zuvor beschriebenen Schwingungsprozesse möglich.

Analoge Kommutierungen finden in jedem 60°-Spannungsintervall bei willkürlicher Polarität der Ausgangsströme statt, wenn die in Fig. 4 angegebenen Pulsmuster verwendet werden. Es ist wesentlich während der ARCP Kommutierung, immer diejenigen beiden Hilfsschalter zu verwenden, die zwischen den Ausgangsphasen mit der entgegengesetzten Polarität der Ausgangsströme liegen. Die Spannung über den aktiven Hilfskommutierungszweigen während der ARCP-Kommutierung ist immer die beträgsmäßig größte verkettete Eingangsspannung. Neben der ARCP-Kommutierung gibt es jeweils zwei nicht synchronisierte, natürliche ZVS-Kommutierungen (kapazitive Kommutierungen) in jeder Schaltergruppe pro Periodendauer $T_s$ der Schaltfrequenz, welche die Hilfskommutierungseinrichtungen nicht benötigen.

Eine induktive Kommutierung, d.h. ein harter aktiver Einschaltvorgang eines Vierquadrantenschalters, muß möglicherweise in jeder Schaltergruppe realisiert werden, wenn am Ende eines Spannungsintervalls das alte Pulsmusters gemäß Fig. 4 verwendet wird und das neue Spannungsintervall bereits während der Periodendauer $T_S$ beginnt. Es wird vorausgesetzt, daß die Pulsmuster für das neue Spannungsintervall erst mit dem Beginn der neuen Periodendauer $T_S$ verwendet werden. Die resultierende Verlustenergie eines solchen harten Einschaltvorganges eines Vierquadrantenschalters kann jedoch üblicherweise vernachlässigt werden, wenn die Schaltfrequenz $f_S$ hinreichend groß ist, weil die Kommutierungsspannung dieser induktiven Kommutierung immer die sehr kleine verkettete Eingangsspannung ist, die ihre Polarität an der Grenze des Spannungsintervalls ändert.

Wenn der Ausgangsstrom einer Phase seine Polarität zu einem beliebigen Zeitpunkt während der Periodendauer $T_S$ ändert und die neuen Pulsmusters erst in der neuen Periodendauer $T_S$ der Schaltfrequenz verwendet werden, so findet die ARCP-Kommutierung im wesentlichen wie zuvor beschrieben statt. Dies gilt selbst dann, wenn der Ausgangsstrom seine Polarität vor oder während der ARCP-Kommutierung ändert.

Es ist aber auch möglich, daß im schlimmsten Fall zwei kapazitive Kommutierungen in zwei induktive Kommutierungen transformiert werden, wenn die Schaltreihenfolge des alten Pulsmusters nach dem Polaritätswechsel des Ausgangsstromes verwendet wird. Folglich können zwei aktive Einschaltvorgänge stattfinden, in denen gespeicherte Energie der Resonanzkapazitäten einer Schaltergruppe in Wärme beim aktiven Einschaltvorgang der Schalter umgewandelt wird. Dennoch ist es vorteilhaft, daß die Kommutierungsspannung für beide möglichen induktiven Kommutierungen immer eine der beiden betragsmäßig kleineren verketteten Eingangsspannungen eines 60°-Spannungsintervalls ist.

Mit der Ausnahme der induktiven Kommutierungen, die durch eine Veränderung des 60°-Spannungsintervalls der Eingangsspannung bzw. einen Polaritätswechsel eines Ausgangsstromes des Stromrichters hervorgerufen werden, können die Schalter des erfindungsgemäßen quasiresonanten Matrix-Stromrichters prinzipiell als Nullspannungsschalter arbeiten. Wenn jedoch der Ausgangsstrom vor oder nach einem Nulldurchgang eines Phasenstromes sehr klein ist, so kann die kapazitive Kommutierung durch einen harten aktiven Einschaltvorgang nach Ablauf einer maximalen Kommutierungsdauer $t_{Cmax}$ beendet werden, um extrem lange Kommutierungen zu vermeiden. Folglich existiert ein Bereich

$$\frac{t_{hard}}{T_0} = \frac{2}{\pi}\arcsin\frac{3 \cdot \sqrt{3} \cdot C_r \cdot v_N}{\sqrt{2} \cdot t_{C\max} \cdot i_o},\tag{14}$$

wobei

$t_{hard}$ = Zeitintervall, in dem hart geschaltet wird (in dem der ZVS-Bereich verlassen wird, um die Strom- und Spannungsformen am Ein- bzw. Ausgang des Stromrichters nicht zu verfälschen),
$T_0$ = Periodendauer des Ausgangsstromes,
$v_N$ = verkettete Nenn-Eingangsspannung,
$t_{Cmax}$ = maximale Kommutierungsdauer einer kapazitiven Kommutierung,
$i_0$ = Amplitude des Ausgangsstromes
$C_r$ = eine der Resonanzkapazitäten $C_{r11}$ bis $C_{r33}$,

in dem der Bereich des Nullspannungsschaltens aufgegeben wird, weil eine oder zwei kapazitive Kommutierungen durch einen harten aktiven Einschaltvorgang beendet werden. In gleicher Art und Weise wie bei dem zuvor beschriebenen aktiven Einschaltvorgang werden die Resonanzkapazitäten der jeweiligen Schaltergruppe über dem aktiv einschaltenden Schalter verlustbehaftet umgeladen. Wenn die Eingangsspannung und der Ausgangsstrom durch die spezielle Anwendung bestimmt werden, wird der verbleibende Bereich des Nullspannungsschaltens

$$\frac{t_{soft}}{T_0} = 1 - \frac{t_{hard}}{T_0},\tag{15}$$

mit $t_{soft}$ = Zeitintervall, in dem vollständig weich geschaltet wird,

des neuen quasiresonanten Stromrichters durch die Resonanzkapazitäten und $t_{Cmax}$ definiert. Es ist vorstehend angedeutet, daß der ZVS-Bereich zusätzlich an der Grenze zwischen zwei 60°-Spannungsintervallen für maximal einen Schaltvorgang pro Schaltergruppe verlassen werden kann.

Die Auswahl der Resonanzkapazitäten, der Resonanzinduktivitäten und die Wahl des Booststromes bestimmen wesentlich die Verluste, die Kommutierungszeiten, die minimalen Tastverhältnisse und die auftretende di/dt's (Stromsteilheiten) und du/dt's (Spannungssteilheiten) des quasiresonanten Matrix-Stromrichters. Alle Werte sollten so gewählt werden, daß auf der einen Seite die Verluste minimal sind und auf der anderen Seite hinreichend kurze Kommutierungszeiten erreicht werden können. Die Auswahl der Resonanzinduktivitäten wird durch die Tatsache vereinfacht, daß die Kommutierungsspannung der ARCP-Kommutierung sich nur leicht ändert. Als Resonanzkapazitäten können neben externen Kapazitäten auch die ohnehin stets vorhandenen Ausgangskapazitäten der Leistungshalbleiter genutzt werden.

Im Unterschied zu den Kompromissen, die beim ARCP-Stromrichter mit Gleichspannungszwischenkreis getroffen werden müssen, kommt bei der Dimensionierung des ARCP-Matrix-Stromrichters (insbesondere bei der Dimensionierung der Resonanzkapazitäten) die Notwendigkeit hinzu, den nullspannungsschaltenden Bereich zu verlassen. Die durch den Booststrom in den Schwingkreis gebrachte zusätzliche Energie, sollte die Energieverluste, die während der ARCP- Schwingungsphase auftreten, deutlich überschreiten. Zwei der drei Hilfsschalter arbeiten stationär mit der gleichen Schaltfrequenz wie die Nullspannungsschalter im quasiresonanten Matrix-Stromrichter. Weil die Hilfsschalter nur sehr kurze Strompulse tragen, können die Nennströme dieser Schalter viel kleiner als die der Hauptschalter sein. Insbesondere können MCT`s bei mittleren und hohen Schaltfrequenzen oder rückwärts sperrfähige Thyristoren bei niedrigen Schaltfrequenzen und hohen Ausgangsleistungen verwendet werden.

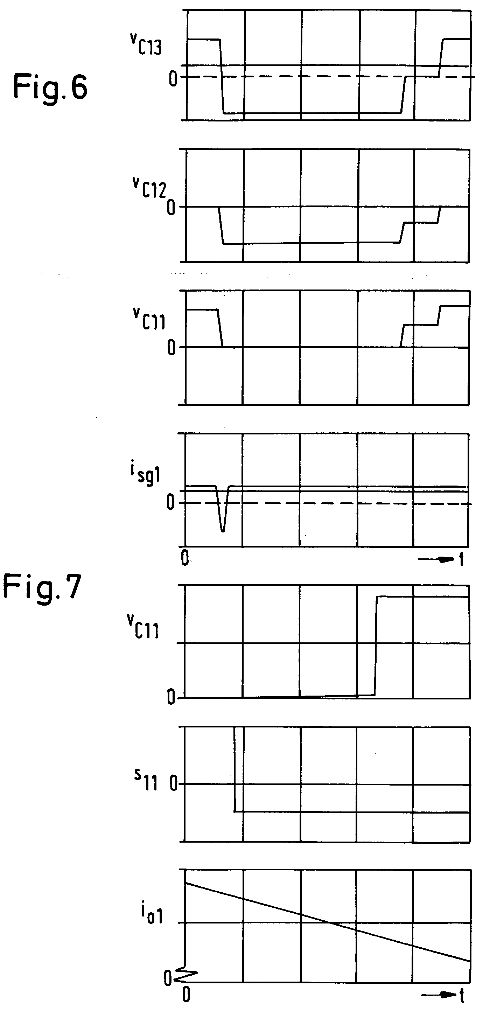

In Fig. 6 sind die Schalterspannungen $v_{C11}$, $v_{C12}$, $v_{C13}$ und der Schaltergruppenstrom $i_{sg1}$ im Spannungsintervall 6 dargestellt.. Weil der Ausgangsstrom $i_{01}$ positiv ist, wird gemäß der Tabelle in Fig. 4 das Pulsmuster $S_{12} \rightarrow S_{11} \rightarrow S_{13} \rightarrow S_{12}$ in der ersten Schaltergruppe realisiert. Der Polaritätswechsel von $i_{sg1}$ kennzeichnet die ARCP-Kommutierung des Ausgangsstromes $i_{01}$ von $S_{12}$ auf $S_{11}$. Die zwei anderen Kommutierungen von $S_{11}$ auf $S_{13}$ und von $S_{13}$ auf $S_{12}$ sind natürliche ZVS-Kommutierungen, die die Hilfskommutierungseinrichtung nicht nutzen.

Die Beendigung einer sehr langsamen kapazitiven Kommutierung von $S_{11}$ auf $S_{13}$ im Spannungsintervall 6, die durch einen sehr kleinen Wert des Ausgangsstromes $i_{01}$ verursacht wird, ist in Fig. 7 zu sehen. Zunächst wird der Schalter $S_{11}$ ausgeschaltet (siehe Schaltzustandsvariable $s_{11}$ für den Hauptschalter $S_{11}$) und die Spannung über $S_{11}$ steigt langsam an. Nach Ablauf der maximalen Kommutierungsdauer $t_{Cmax}$ wird die kapazitive Kommutierung durch einen aktiven Einschaltvorgang des Schalters $S_{13}$ beendet. Die Spannung $v_{C11}$ steigt sehr schnell auf ihren neuen Wert $v_{C11} = v_{i13}$ und $S_{13}$ übernimmt den Ausgangsstrom $i_{01}$.

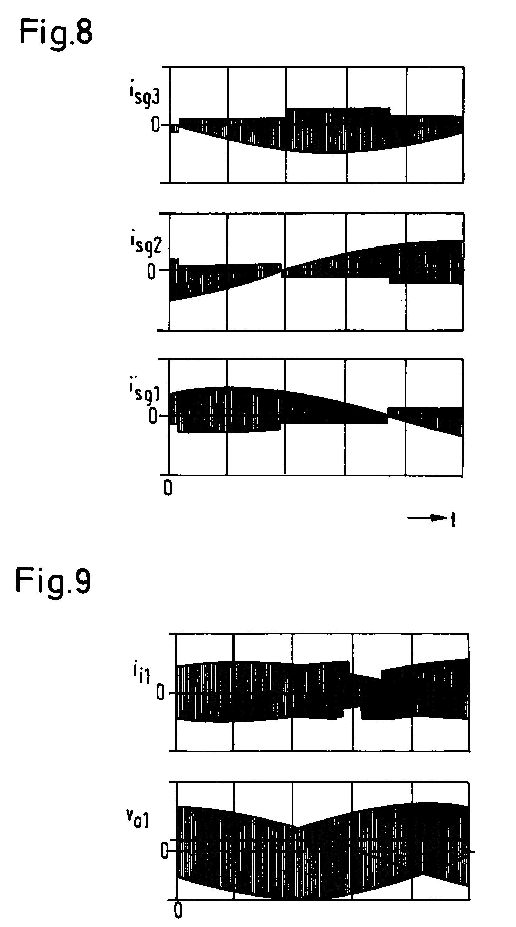

Fig. 8 zeigt die Ströme $i_{sg1}$, $i_{sg2}$, $i_{sg3}$ der drei Schaltergruppen des quasiresonanten Matrix-Stromrichters für eine Zeitperiode mit verschiedenen Nulldurchgängen der Ausgangsströme. Wie auf Grund der Gleichungen (7), (8), (9) zu erwarten, haben die zwei Schaltergruppen, die die Ausgangsströme mit dem gleichen Vorzeichen führen, nur eine Stromamplitude während der ARCP-Kommutierung, die halb so groß ist wie die der weiteren Schaltergruppe. Die Ausgangsspannung $v_{o1}$ und der Eingangsstrom $i_{i1}$ sind in Fig. 9 für eine Phasenverschiebung am Ausgang von $\varphi_o = 30°$ gezeigt, wenn am Eingang ein Leistungsfaktor von $\cos\varphi_i = 1$ realisiert wird.

Bezugszeichenliste

| | |
|---|---|
| 1, 2, 3, 4, 5, 6 | Spannungsintervalle ($v_i$ - Intervalle) |
| a | ARCP-Kommutierung |
| $AS_{12}$, $AS_{32}$, $AS_{31}$ | Hilfsschalter der Hilfskommutierungseinrichtungen |
| AS | Hilfsschalter allgemein |
| B | rückwärts (backward) |
| c | natürliche kapazitive (ZVS) Kommutierung |
| $C_C$ | Kommutierungskapazität |
| $C_{cmin}$ | minimaler Wert der Kommutierungskapazität |
| $C_{f1}$, $C_{f2}$, $C_{f3}$ | Filterkapazitäten |
| $C_r$ | Resonanzkapazität allgemein |
| $C_{r11}$, $C_{r12}$, $C_{r13}$, | Resonanzkapazitäten der 1. Schaltergruppe |
| $C_{r21}$, $C_{r22}$, $C_{r23}$ | Resonanzkapazitäten der 2. Schaltergruppe |
| $C_{r31}$, $C_{r32}$, $C_{r33}$ | Resonanzkapazitäten der 3. Schaltergruppe |
| $D_1$, $D_2$ | Inversdioden |
| F | vorwärts (forward) |
| $f_i$ | Netzfrequenz |
| $f_S$ | Schaltfrequenz |
| $i_{a32}$, $i_{a31}$, $i_{a21}$ | Ströme über die Hilfskommutierungseinrichtungen |
| $i_b$ | Booststrom |
| $i_L$ | Laststrom (= Motorphasenstrom) |
| $i_o$ | Amplitude des Ausgangsstromes |

$i_{o1}$, $i_{o2}$, $i_{o3}$ — Ausgangsströme an den Lastanschlüssen

$i_{i1}$, $i_{i2}$, $i_{i3}$ — Eingangsströme der Schaltergruppen

$i_{sg1}$, $i_{sg2}$, $i_{sg3}$ — Schaltergruppenströme

$L_C$ — Kommutierungsinduktivität

$L_{cmin}$ — minimaler Wert der Kommutierungsinduktivität

$L_{l1}$, $L_{l2}$, $L_{l3}$ — Lastinduktivitäten

$L_{f1}$, $L_{f2}$, $L_{f3}$ — Filterinduktivitäten

$L_r$ — Resonanzinduktivität allgemein

$L_{r1}$, $L_{r2}$, $L_{r3}$ — Resonanzinduktivitäten

SC1, SC2 — Schalter

$S_{11}$, $S_{12}$, $S_{13}$ — Hauptschalter der 1. Schaltergruppe

$S_{21}$, $S_{22}$, $S_{23}$ — Hauptschalter der 2. Schaltergruppe

$S_{31}$, $S_{32}$, $S_{33}$ — Hauptschalter der 3. Schaltergruppe

S — Hauptschalter allgemein

$s_{11}$ — Schaltzustandsvariable für $S_{11}$

$T_1$, $T_2$ — IGBT-Halbleiter

$T_i$ — Netz-Periodendauer

$T_S$ — Periodendauer der Schaltfrequenz

$T_o$ — Periodendauer des Ausgangsstromes

t — Zeit allgemein

$t_{cmax}$ — maximale Kommutierungsdauer

$t_{hard}$ — Zeitintervall mit harten Kommutierungen

$t_{soft}$ — Zeitintervall mit weichen Kommutierungen

$V_i$ — Amplitude der Eingangsspannungen

$v_{o1}$, $v_{o3}$, $v_{o3}$ — Ausgangsspannungen der Schaltergruppen

$v_{o12}$, $v_{o32}$, $v_{o31}$ — Spannungen an den Hilfskommutierungseinr.

$v_{i1}$, $v_{i2}$, $v_{i3}$ — Eingangsspannungen der Schaltergruppen

$v_{i12}$, $v_{i23}$, $v_{i31}$ — verkettete Eingangsspannungen

$v_{l1}$, $v_{l2}$, $v_{l3}$ — Lastspannungen

$v_c$ — Kommutierungsspannung

$v_{c11}$, $v_{c12}$, $v_{c13}$ — Schalterspg. = Spg. an den Resonanzkapazitäten

$v_{c21}$, $v_{c22}$, $v_{c23}$

$v_{c31}$, $v_{c32}$, $v_{c33}$

$v_{m1}$, $v_{m2}$, $v_{m3}$ — Netzspannungen

$v_N$ — verkettete Nenn-Eingangsspannung

$v_{SC1}$, $v_{SC2}$ — Spannungen an den Schaltern

x — Variable, x = 1, 2, 3

$\varphi_i$ — Phasenverschiebung zwischen Eingangsspannung und Eingangsstrom

$\varphi_o$ — Phasenverschiebung zwischen Ausgangssspannung und Ausgangsstrom

$\omega_i$ — Netz-Kreisfrequenz

$\omega_o$ — Ausgangs-Kreisfrequenz

$\theta_i$ — Verschiebungswinkel der Eingangsspannungen

$\theta_o$ — Verschiebungswinkel der Ausgangsströme

ZCS — Zero Current Switch = Nullstromschalter

ZVS — Zero Voltage Switch = Nullspannungsschalter

ARCP — Auxiliary Resonant Commutated Pole

## Patentansprüche

1. Dreiphasiger Matrix-Stromrichter zur einstufigen Umrichtung von Wechselspannungen vorgegebener Amplitude und Frequenz in Wechselspannungen beliebiger Amplitude und Frequenz, mit Viersegmentschaltern als Hauptschalter ($S_{11}$, $S_{12}$, $S_{13}$, $S_{21}$, $S_{22}$, $S_{23}$, $S_{31}$, $S_{32}$, $S_{33}$), die in drei Schaltergruppen zusammengefaßt sind, dadurch gekennzeichnet, daß jedem Hauptschalter jeweils eine Resonanzkapazität ($C_{r11}$, $C_{r12}$, $C_{r13}$, $C_{r21}$, $C_{r22}$, $C_{r23}$, $C_{r31}$, $C_{r32}$, $C_{r33}$) parallel liegt oder ersatzweise die Ausgangskapazitäten der Leistungshalbleiter der Hauptschalter als Resonanzkapazitäten wirken und daß zwischen den dreiphasigen Ausgangsanschlüssen der Schaltergruppen jeweils eine Hilfskommutierungseinrichtung mit einem als Viersegmentschalter ausgebildeten Hilfsschalter ($AS_{31}$, $AS_{32}$, $AS_{12}$) und in Serie hierzu geschalteter Resonanzinduktivität ($L_{r3}$, $L_{r2}$, $L_{r1}$) vorgesehen ist.

2.  Matrix-Stromrichter nach Anspruch 1, dadurch gekennzeichnet, daß als Hauptschalter und/oder Hilfsschalter jeweils zwei in Serie geschaltete Parallelschaltungen eines IGBT-Halbleiters ($T_1$, $T_2$) mit einer Inversdiode ($D_1$, $D_2$) vorgesehen sind.

3.  Matrix-Stromrichter nach Anspruch 1, dadurch gekennzeichnet, daß als Hauptschalter jeweils zwei sperrfähige parallelgeschaltete GTO-Thyristoren und im Hilfsschalter zwei parallele sperrfähige GTO-Thyristoren oder schnelle Thyristoren vorgesehen sind.

4.  Matrix-Stromrichter nach Anspruch 1, dadurch gekennzeichnet, daß als Hauptschalter und/oder Hilfsschalter jeweils zwei in Serie geschaltete Parallelschaltungen eines asymmetrischen GTOs mit einer Inversdiode vorgesehen sind.

5.  Verfahren zum Betrieb des dreiphasigen Matrix-Stromrichters gemäß Anspruch 1, dadurch gekennzeichnet, daß die Schaltreihenfolge einer Schaltergruppe in Abhängigkeit der Eingangs-Spannungsintervalle (1 bis 6) und der Polarität des Ausgangsstromes ($i_{01}$ bis $i_{03}$) derart gewählt wird, daß zwei kapazitive und eine induktive Kommutierung stattfinden würden, daß die Pulsmuster derart gewählt werden ,daß die induktiven Kommutierungen pro Periodendauer ($T_S$) der Schaltfrequenz ($f_S$) zum gleichen Zeitpunkt stattfinden würden und daß mit Hilfe der Hilfskommutierungseinrichtungen durch eine Veränderung der Polarität der Ströme ($i_{sg1}$, $i_{sg2}$, $i_{sg3}$) durch die Hauptschalter vor den aktiven Schaltvorgängen der Hauptschalter die natürlichen induktiven in kapazitive Kommutierungen transformiert werden.

6.  Verfahren nach Anspruch 5, dadurch gekennzeichnet, daß stets die betragsmäßig größte verkettete Eingangsspannung ($v_{i12}$, $v_{i23}$, $v_{i13}$) als Kommutierungsspannung für die transformierte induktive Kommutierung herangezogen wird.

7.  Verfahren nach Anspruch 5 und/oder 6, dadurch gekennzeichnet, daß die Schaltergruppe mit dem kürzesten Tastverhältnis der drei anfänglich leitenden Hauptschalter die Kommutierung in allen drei Schaltergruppen einleitet.

8.  Verfahren nach Anspruch 5 und/oder 6, dadurch gekennzeichnet, daß die Schaltreihenfolge derart gewählt wird, daß zunächst die beiden kapazitiven, nicht transformierten Kommutierungen stattfinden und am Ende der Periodendauer der Schaltfrequenz die transformierte Kommutierung stattfindet.

9.  Verfahren nach einem der Ansprüche 5 bis 8, dadurch gekennzeichnet, daß zur Transformation der Kommutierung stets diejenigen beiden Hilfsschalter der Hilfskommutierungseinrichtungen verwendet werden, die zwischen den dreiphasigen Ausgangsphasen der Schaltergruppen mit der entgegengesetzten Polarität der Ausgangsströme ($i_{01}$, $i_{02}$, $i_{03}$) liegen.

# Fig.1

# Fig.2

Fig.3

Fig.4

| Voltage-Interval | Direction of $i_{ox}$ (x=1,2,3) | Pulse Patterns and Switching Sequence (F:Forward; B:Backward: x=(1,2,3); a:ARCP Commutation: c:Capacitive (ZVS) Commutation: | |
|---|---|---|---|
| 1 | $i_{ox}>0$ | $S_{x3} \xrightarrow{a} S_{x1} \xrightarrow{c} S_{x2} \xrightarrow{c} S_{x3}$ | F |
| | $i_{ox}<0$ | $S_{x1} \xrightarrow{a} S_{x3} \xrightarrow{c} S_{x2} \xrightarrow{c} S_{x1}$ | B |
| 2 | $i_{ox}>0$ | $S_{x3} \xrightarrow{a} S_{x2} \xrightarrow{c} S_{x1} \xrightarrow{c} S_{x3}$ | B |
| | $i_{ox}<0$ | $S_{x2} \xrightarrow{a} S_{x3} \xrightarrow{c} S_{x1} \xrightarrow{c} S_{x2}$ | F |
| 3 | $i_{ox}>0$ | $S_{x1} \xrightarrow{a} S_{x2} \xrightarrow{c} S_{x3} \xrightarrow{c} S_{x1}$ | F |
| | $i_{ox}<0$ | $S_{x2} \xrightarrow{a} S_{x1} \xrightarrow{c} S_{x3} \xrightarrow{c} S_{x2}$ | B |
| 4 | $i_{ox}>0$ | $S_{x1} \xrightarrow{a} S_{x3} \xrightarrow{c} S_{x2} \xrightarrow{c} S_{x1}$ | B |
| | $i_{ox}<0$ | $S_{x3} \xrightarrow{a} S_{x1} \xrightarrow{c} S_{x2} \xrightarrow{c} S_{x3}$ | F |
| 5 | $i_{ox}>0$ | $S_{x2} \xrightarrow{a} S_{x3} \xrightarrow{c} S_{x1} \xrightarrow{c} S_{x2}$ | F |
| | $i_{ox}<0$ | $S_{x3} \xrightarrow{a} S_{x2} \xrightarrow{c} S_{x1} \xrightarrow{c} S_{x3}$ | B |
| 6 | $i_{ox}>0$ | $S_{x2} \xrightarrow{a} S_{x1} \xrightarrow{c} S_{x3} \xrightarrow{c} S_{x2}$ | B |
| | $i_{ox}<0$ | $S_{x1} \xrightarrow{a} S_{x2} \xrightarrow{c} S_{x3} \xrightarrow{c} S_{x1}$ | F |

EP 0 833 431 A2

Fig.5

14

Fig.6

Fig.7

# Fig.8

$i_{sg3}$

0

$i_{sg2}$

0

$i_{sg1}$

0

0

$\longrightarrow t$

# Fig.9

$i_{i1}$

0

$v_{o1}$

0

0